# EUROPEAN PATENT SPECIFICATION

(11) **EP 1 160 102 B1**
(45) Date of publication and mention of the grant of the patent: **06.05.2004**
(21) Application number: 00128073.4
(22) Date of filing: 21.12.2000
(51) Int. Cl.: B60C 27/08, B60C 27/10, B60C 27/06

(54) **Connecting hook for joining elements of snow chains**
Verbindungshaken um Elemente von Reifenketten zu verbinden
Crochet de liaison pour relier des éléments de chaînes de neige

(30) Priority: 02.06.2000 IT MI000342 U
(43) Date of publication of application: 05.12.2001
(73) Proprietor: König S.p.A., 23847 Molteno (Lecco) (IT)
(72) Inventor: Airoldi, Romolo, 23900 Lecco (IT)
(74) Representative: Petruzziello, Aldo

(56) References cited:
- DE-A- 19 823 075
- US-A- 1 551 266
- US-A- 1 914 106
- US-A- 3 882 918

## Description

The present invention refers to a connecting hook for joining elements of snow chains.

When a vehicle is on a road surface covered with snow, sleet or ice, its tyres do not have a good grip and dangerous swerving or skidding of the vehicle can occur. To avoid these problems it is customary to use anti-skid devices, commonly called snow chains.

Snow chains, normally mounted on the driving wheels of the vehicle, bite into the snow and/or ice deposited on the road surface, increasing the friction on the tread and allowing the vehicle tyres to achieve a good grip.

As it is known, a snow chain generally consists of two side elements (chains, flexible cables, steel wires, ropes or the like), which during use are closed in a ring on the inner side and the outer side of the wheel, respectively. These side elements, henceforth called inner ring and outer ring according to their position on the wheel, are connected by a series of chain portions variously disposed to achieve the friction on the tread, the whole completed by a device for tensioning said elements, known as a tensioner.

The chain portions that generate the friction on the tread are joined to the inner ring and to the outer ring by means of connecting hooks. Said hooks are obtained from a metal bar having a circular cross section. Said bar is bent in a U-shape in the central area to form a first loop and then it is bent in a U-shape at the two ends to form two second loops.

In this manner the first loop of the hook can engage in a link of the chain portion that generates the friction on the tread and the two second loops can engage in the inner ring or in the outer ring.

The hooks according to the prior art have the drawback of being excessively bulky. Said hooks, in fact, having a circular cross section, have an excessive thickness, thus they protrude excessively from the wheel with the risk of interfering with the mechanical members of the vehicle.

This problem is all the more acute for hooks destined to be applied to the inner ring. In fact said hooks can interfere with the shock absorbers or the suspensions of the vehicle or parts of the body.

In order to partially solve this problem due to the excessive bulk of the connecting hooks, connecting hooks with a reduced thickness have been made from a bar having a substantially flattened rectangular section.

This type of hook is disclosed, for example, by document DE-A-19823075 which refers to a connecting hook, made of a wire having a flattened oval cross section.

This type of hook has solved the problem of the bulk, but presents problems of structural yielding and rapid wear.

In fact the first loop of the hook is in close contact with a link of the portion of chain that creates the friction on the tread. Since the hook is flattened a high friction is generated between the first loop and the link of the chain portion. Consequently said contact part is subject to rubbing friction and mechanical stress which lead to rapid wear and consequent structural yielding of the hook.

Apart from this, the entire structure of the hook is weakened because of the total flattening thereof.

The object of the present invention is to eliminate said drawbacks by providing a connecting hook for joining the elements of snow chains that is not bulky and at the same time is reliable, safe and has a good resistance to stress and wear.

Another object of the present invention is to provide such a hook that is practical, economical and simple to make.

These objects are achieved according to the invention with the characteristics listed in appended independent claim 1.

Advantageous embodiments of the invention are apparent from the dependent claims.

The connecting hook for joining the elements of snow chains according to the invention has a reduced thickness in the area of contact with the inner ring or the outer ring of the snow chains. In the part in contact with the link of the chain portion that creates the friction on the tread, the hook according to the invention has a round section to increase its structural strength and minimise rubbing friction.

The decrease in thickness in the areas destined to come into contact with the inner or outer ring is obtained by flattening of the end parts of the bar destined to form the hook according to the invention. In this manner the thickness of the protruding part of the hook which is in contact with the inner or outer ring is considerably reduced. Thus the hook according to the invention has a limited bulk and consequently, by using said hook, the risk that it might knock against mechanical members of the vehicle is avoided.

Furthermore, the part with a round cross section and a greater thickness gives the hook a greater resistance to stress and less rubbing friction with the link of chain with which it is in contact. Consequently in this point of contact there are fewer problems of wear and breaking of the hook.

Further characteristics of the invention will be made clearer by the detailed description that follows, referring to a purely exemplary and therefore non-limiting embodiment thereof, illustrated in the appended drawings, in which:
Figure 1 is a front view of a self-tensioning device, taken from the outer side of the wheel, in which the outer ring is a chain;
Figure 1a is an enlarged view of the detail enclosed in the circle a of Figure 1, showing the connecting hook according to the invention and two cross sections taken in two parts of the hook;
Figure 2 is a front view of a self-tensioning device, taken from the inner part of the wheel, in which the inner ring is a flexible cable;
Figure 2b is an enlarged view of the detail enclosed in the circle b of Figure 2, showing the connecting hook according to the invention;
Figure 3 is a perspective view showing the connecting hook according to the invention;
Figure 4 is a side view of the connecting hook of Figure 2b, in which the chain portions have not been shown.

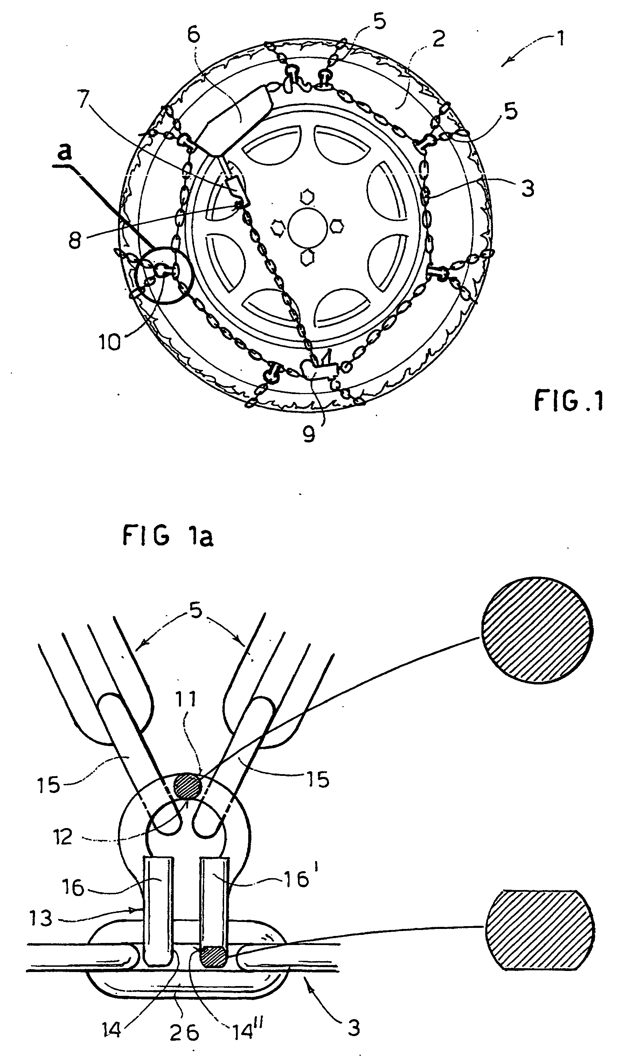

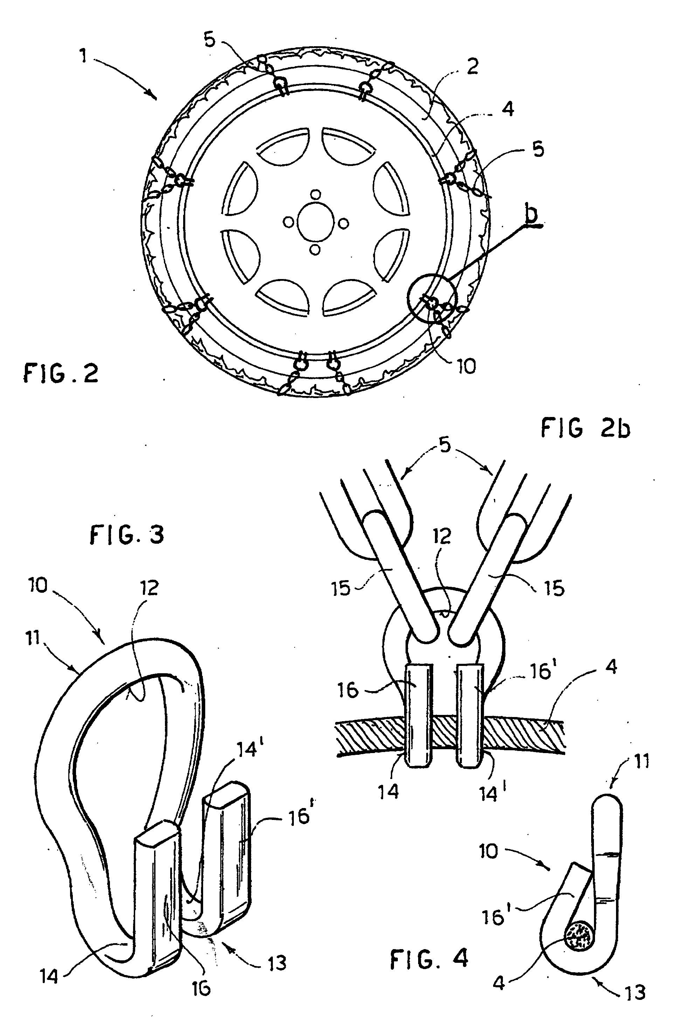

Figures 1 and 2 show a snow chain, indicated as a whole with reference numeral 1 and applied to a tyre 2 of a vehicle.

The snow chain 1 comprises a ring element 3 disposed in the outer part of the tyre 2 and a ring element 4 disposed in the inner part of the tyre 2. The outer ring element 3 consists of a link chain, whereas the inner ring element 4 consists of a flexible cable.

The outer ring element 3 and the inner ring element 4 are connected by means of chain portions 5 that generate the friction on the tread.

The outer ring element 3 has a self-tensioning device 6 that serves to tension the chain of the outer ring element 3. The self-tensioning device 6 has a hook 7 that engages in a link of the terminal portion 8 of chain of the outer ring element to pull it in a tensioning direction. A non-return block 9, through which the terminal portion of the chain 8 passes, is provided in the outer ring. The non-return block 9 allows the terminal portion of chain 8 to slide only in the tensioning direction and not in the slackening direction.

The chain portions 5 that create the friction on the tread are joined to the inner ring 3 and to the outer ring 4 by means of connecting hooks 10.

As shown in Figure 3, the connecting hook 10 comprises a first end 11 with a first U-shaped loop 12 and a second end 13 with two second U-shaped loops 14, 14' disposed on substantially parallel planes and substantially at right angles to the plane of the first loop 12. The second two loops 14, 14' end respectively in two feet 16, 16' which constitute the two terminal parts of the hook 10.

As shown in Figure 1a, two links 15 of the chain portion 5 engage in the first loop 12 of the first end 11 of the hook 10 and a chain link 26 of the outer ring 3 engages in the second loops 14, 14' of the second end 13 of the hook 10.

As shown in Figure 2b, two links 15 of chain portion 5 engage in the first loop 12 of the first end 11 of hook 10, and the flexible cable of inner ring 4 engages into second loops 14, 14' of second end 13 of hook 10.

As shown in Figure 1a the cross sectional shape of the hook 10 in the area of the first loop 12 is substantially circular. In this manner a good strength is given to the hook part 10 which engages with the links 15 of the chain portions 5 that confer the friction on the tread, and furthermore the rubbing friction between the first loop 12 of the hook 10 and the links 15 of chain portions 5 is limited.

As shown in Figure 1a, on the other hand, the cross sectional shape of the hook 10 is substantially rectangular in proximity to the areas of the second loops 14 and 14'. In this manner there is a flattening of the two end feet 16, 16' provided in the second end 13 of the hook 10.

The fact that the terminal feet 16, 16' are flattened gives the hook 10 a minimal bulk in the part that protrudes from the outer ring 3 or from the inner ring 4, thus avoiding interference of the protruding parts of the feet 16 with the mechanical parts of the vehicle.

Production of the hook 10 according to the invention is extremely simple. In fact it starts from a metal bar with a circular section. The metal used can be steel or iron or spring steel. This metal bar is flattened at the two ends and then bent in the central area so as to form the U-shaped loop 12. The end areas are then bent in turn so as to form the two U-shaped loops 14, 14' which end in the end feet 16, 16', respectively, which are flattened and therefore have a smaller thickness with respect to the hook part around the loop 12.

As shown in Figure 4, after the cable 4 of the inner ring is housed in the two U-shaped loops 14, 14' of the second end 13 of the hook, the end feet 16, 16' are bent inwards, so as to prevent the cable 4 from coming out

Various changes and modifications of detail within the reach of a person skilled in the art can be made to the present embodiment of the invention while still remaining within the scope of the invention expressed by the appended claims.

## Claims

1. A connecting hook for joining elements of a snow chain, comprising a first end part (11) destined to engage in at least one link (15) of a chain portion (5) creating the friction on the tread and a second end part (13) destined to engage in a part of a ring element (3, 4) that is disposed on the outer or inner side of a tyre (2), **characterised in that**, in a direction perpendicular to the plane defined by said first end part (11), the thickness of said second end part (13) of the hook (10) is smaller than that of said first end part (11).

2. A hook according to claim 1, **characterised in that** said first end part (11) has a substantially circular cross section and said second end part (13) has a substantially rectangular cross section with the shorter side perpendicular to said plane defined by said first end part (11) the length of said shorter side of said second end part (13) being smaller than the diameter of said circular cross section of said first end part (11).

3. A hook according to claim 1 or 2, **characterised in that** said first end part (11) has a first loop (12) having a substantially U-shaped configuration and said second end part (13) has two loops (14, 14') having a substantially U-shaped configuration.

4. A hook according to claim 3, **characterised in that** said second loops (14, 14') are situated on substantially parallel planes, spaced apart and substantially at right angles to the plane on which said first loop (12) is situated.

5. A hook according to any one of the preceding claims, **characterised in that** it is obtained from a metal bar with a substantially circular cross section whose ends (16, 16') are flattened to have a smaller thickness than the central part.

6. A hook according to claim 5, **characterised in that** said bar is made of steel, or spring steel or iron.

7. A hook according to claim 5 or 6, **characterised in that** said first loop (12) is made by bending into a U-shape of said bar in the central area and said second loops (14, 14') are made by bending into a U-shape of the ends (16) of said bar.

8. A hook according to any one of the preceding claims, **characterised in that** said ring element (3) disposed on the outer side of the tyre (2) is a link chain and said second end part (13) of said hook engages in a link (26) of said ring element.

9. A hook according to any one of claims 1 to 8, **characterised in that** said ring element (4) disposed on the inner side of the tyre is a flexible cable that engages in said second end part (13) of the hook.

10. A snow chain comprising a first ring element (3) destined to be disposed on the outer side of a tyre (2), a second ring element (4) destined to be disposed on the inner side of a tyre and portions of chain (5) creating the friction on the tread connected to said outer ring element (3) and to said inner ring element (4), **characterized in that** said chain portions are connected to said inner ring element (4) and/or to said outer ring element (3) by means of at least one of said connecting hooks according to any one of the preceding claims.

## Patentansprüche

1. Ein Verbindungshaken zur Verbindung von Elementen einer Schneekette, welcher einen ersten Endteil (11) umfasst, der dazu bestimmt ist, in mindestens ein Kettenglied (15) eines Kettenabschnitts (5) einzurasten, der die Reibung der Lauffläche herstellt, sowie einen zweiten Teil (13), der dazu bestimmt ist, in einen Teil eines Ringelements (3, 4) einzugreifen, das an der äußeren oder inneren Seite eines Reifens (2) angeordnet wird, **dadurch gekennzeichnet, dass** die Stärke des genannten zweiten Teils (13) des Hakens (10) in senkrechter Richtung zu der durch den genannten ersten Teil (11) gebildeten Fläche geringer als die des genannten ersten Teils (11) ist.

2. Ein Haken gemäß Anspruch 1, **dadurch gekennzeichnet, dass** der genannte erste Endteil (11) einen im wesentlichen kreisförmigen Querschnitt aufweist und dass der genannte zweite Endteil (13) einen im wesentlichen rechteckigen Querschnitt aufweist, wobei die kürzere Seite senkrecht zu der genannten Fläche verläuft, die durch den genannten ersten Endteil (11) gebildet wird und die Länge der genannten kürzeren Seite des genannten zweiten Endteils (13) geringer als der Durchmesser des genannten kreisförmigen Querschnitt des genannten ersten Endteils (11) ist.

3. Ein Haken gemäß den Ansprüchen 1 oder 2, **dadurch gekennzeichnet, dass** der genannte erste Endteil (11) eine erste Schleife (12) aufweist, die eine im wesentlichen U-förmige Gestalt hat und dass der genannte zweite Endteil (13) zwei Schleifen (14, 14') aufweist, die eine im wesentlichen U-förmige Gestalt haben.

4. Ein Haken gemäß Anspruch 3, **dadurch gekennzeichnet, dass** die genannten zweiten Schleifen (14, 14') auf im wesentlichen parallelen Ebenen liegen, jeweils voneinander entfernt und im wesentlichen im rechten Winkel zu der Fläche, auf der die genannte erste Schleife (12) sich befindet.

5. Ein Haken gemäß einem beliebigen der vorausgegangenen Ansprüche, **dadurch gekennzeichnet, dass** er aus einer Metallstange mit einem im wesentlichen kreisförmigen Querschnitt gewonnen wird, deren Enden (16, 16') abgeflacht sind, um eine im Verhältnis zum mittleren Teil geringere Stärke zu erzielen.

6. Ein Haken gemäß Anspruch 5, **dadurch gekennzeichnet, dass** die genannte Stange aus Stahl oder Federstahl oder Eisen ist.

7. Ein Haken gemäß Anspruch 5 oder 6, **dadurch gekennzeichnet, dass** die genannte erste Schleife (12) dadurch erzielt wird, dass die genannte Stange in ihrem mittleren Bereich in U-Form gebogen wird und dass die genannten zweiten Schleifen (14, 14') dadurch entstehen, dass die Enden (16) der genannten Stange in U-Form gebogen werden.

8. Ein Haken gemäß einem beliebigen der vorausgegangenen Ansprüche, **dadurch gekennzeichnet, dass** das genannte Ringelement (3), das an der äußeren Seite des Reifens (2) angeordnet ist, eine Gliederkette ist und dass der genannte zweite Endteil (13) des genannten Hakens in ein Glied (26) des genannten Ringelements eingreift.

9. Ein Haken gemäß einem beliebigen der Ansprüche von 1 bis 8, **dadurch gekennzeichnet, dass** das genannte Ringelement (4), welches an der inneren Seite des Reifen angeordnet ist, ein flexibles Kabel ist, das in den genannten zweiten Endteil (13) des Hakens eingreift.

10. Eine Schneekette, die ein erstes Ringelement (3) umfasst, welche dazu bestimmt ist, an der äußeren Seite eines Reifens (2) angeordnet zu werden, ein zweites Ringelement (4), welches dazu bestimmt ist, an der inneren Seite eines Reifens angeordnet zu werden, sowie Kettenabschnitte (5), die die Reibung auf der Lauffläche herstellen, welche mit dem genannten äußeren Ringelement (3) und dem genannten inneren Ringelement (4) verbunden sind, **dadurch gekennzeichnet, dass** die genannten Kettenabschnitte mit dem genannten inneren Ringelement (4) und/oder mit dem genannten äußeren Ringelement (3) mit Hilfe von mindestens einem der genannten Verbindungshaken gemäß einem beliebigen der vorausgegangenen Ansprüche verbunden sind.

## Revendications

1. Crochet d'attache pour le raccord d'éléments d'une chaîne à neige, comprenant une première partie d'extrémité (11) destinée à s'engager dans au moins un maillon (15) d'un morceau de chaîne (5) réalisant la friction sur la chape et une deuxième partie d'extrémité (13) destinée à s'engager dans une partie d'un élément à anneau (3, 4) qui est placé sur le côté extérieur ou intérieur d'un pneumatique (2) **caractérisé en ce que**, dans une direction perpendiculaire à la surface plane définie par ladite première partie d'extrémité (11), ladite deuxième partie d'extrémité (13) du crochet (10) a une épaisseur inférieure à celle de ladite première partie d'extrémité (11).

2. Crochet selon la revendication 1, **caractérisé en ce que** ladite première partie d'extrémité (11) possède une section transversale substantiellement circulaire et que ladite deuxième partie d'extrémité (13) possède une section transversale substantiellement rectangulaire avec le côté plus court perpendiculaire à ladite surface plane définie par ladite première partie d'extrémité (11), la longueur dudit côté plus court de ladite deuxième partie d'extrémité (13) étant plus petit que le diamètre de ladite section transversale circulaire de ladite première partie d'extrémité (11).

3. Crochet selon la revendication 1 ou 2, **caractérisé en ce que** ladite première partie d'extrémité (11) présente une première boucle (12) ayant une conformation substantiellement en forme de U et que ladite deuxième partie d'extrémité (13) présente deux boucles (14, 14') ayant une conformation substantiellement en forme de U.

4. Crochet selon la revendication 3, **caractérisé en ce que** lesdites secondes boucles (14, 14') sont placées sur des plans substantiellement parallèles, espacés entre eux et substantiellement à angles droits par rapport à la surface plane sur laquelle se trouve ladite première boucle (12).

5. Crochet selon une revendication quelconque parmi les revendications susmentionnées, **caractérisé en ce qu'**il est obtenu à partir d'une barre métallique à la section transversale substantiellement circulaire dont les extrémités (16, 16') sont aplaties pour avoir une épaisseur inférieure à la partie centrale.

6. Crochet selon la revendication 5, **caractérisé en ce que** ladite barre est réalisée en acier, ou en acier pour ressorts ou en fer.

7. Crochet selon la revendication 5 ou 6, **caractérisé en ce que** ladite première boucle (12) est réalisée en arquant ladite barre en forme de U dans la zone centrale et que lesdites secondes boucles (14, 14') sont réalisées en arquant les extrémités (16) de ladite barre en forme de U.

8. Crochet selon une revendication quelconque parmi les revendications susmentionnées, **caractérisé en ce que** ledit élément à anneau (3) placé sur le côté extérieur du pneumatique (2) est une chaîne à maillons et que ladite deuxième partie d'extrémité (13) dudit crochet s'engage dans un maillon (26) dudit élément à anneau.

9. Crochet selon une revendication quelconque parmi les revendications allant de 1 à 8, **caractérisé en ce que** ledit élément à anneau (4) placé sur le côté intérieur du pneumatique est un câble flexible qui s'engage dans ladite deuxième partie d'extrémité (13) du crochet.

10. Chaîne à neige comprenant un premier élément à anneau (3) destiné à être placé sur le côté extérieur d'un pneumatique (2), un deuxième élément à anneau (4) destiné à être placé sur le côté intérieur d'un pneumatique et des morceaux de chaîne (5) réalisant la friction sur la chape reliés audit élément à anneau extérieur (3) et audit élément à anneau intérieur (4), **caractérisé en ce que** lesdits morceaux de chaîne sont reliés audit élément à anneau intérieur (4) et/ou audit élément à anneau extérieur (3) par au moins un desdits crochets d'attache selon une revendication quelconque parmi les revendications susmentionnées.
